# EUROPEAN PATENT APPLICATION

(11) **EP 4 398 377 A1**
(43) Date of publication of application: **10.07.2024**
(21) Application number: 23214602.7
(22) Date of filing: 06.12.2023
(51) Int. Cl.: H01M 10/42, H01M 10/48, H01M 50/209, H01M 50/284, H01M 50/507, H01M 50/519

(54) **RECHARGEABLE BATTERY MODULE**

(30) Priority: 13.12.2022 KR 20220174028
(71) Applicant: Samsung SDI Co., Ltd., Yongin-si, Gyeonggi-do 17084 (KR)
(72) Inventor: LEE, Hyeok, 17084 Yongin-si (KR); KWON, Young-Hwan, 17084 Yongin-si (KR)
(74) Representative: Marks & Clerk LLP

(57) **Abstract**

A rechargeable battery module is provided. The rechargeable battery module includes: a plurality of battery cells stacked in a first direction; a busbar holder configured to cover the battery cells while exposing electrode terminals of the battery cells in a third direction crossing a second direction from both sides of the second direction crossing the first direction; a busbar configured to connect the electrode terminals exposed to the busbar holder; and a flexible printed circuit connected to the busbar and covered with a film, wherein the flexible printing circuit includes: a body portion configured to form a plurality of signal lines in the film; a sensing unit connected to the busbar; a connection portion configured to form a connection line connecting the signal line and the sensing unit in the film and to have a connection width that is set; and a slot hole configured to pass through the film along a circumference of the sensing unit to form the connection portion and to have a penetration width.

## Description

### BACKGROUND

### (a) Field

The present disclosure relates to a rechargeable battery module, and more particularly, to a rechargeable battery module connecting a sensing unit of a flexible printed circuit (FPC) to a busbar.

### (b) Description of the Related Art

A rechargeable battery can be repeatedly charged and discharged, unlike a primary battery. Small-capacity rechargeable batteries are used in portable electronic devices such as mobile phones, notebook computers, and camcorders.

Large-capacity and high-density rechargeable batteries are used for power for motor driving of hybrid vehicles and electric vehicles, or energy storage. The rechargeable battery may be used by forming a rechargeable battery module including a plurality of battery cells connected in series and/or parallel to drive a motor of, e.g., a hybrid vehicle requiring relatively high energy density.

For example, a rechargeable battery module uses a sensing tab to connect a flexible printed circuit (FPC) for measuring cell voltage and a busbar made of aluminium or copper.

Due to swelling generated in a battery cell, an Al busbar connected to an electrode terminal of the battery cell flows, that is shifts or moves. Accordingly, a sensing unit of the flexible printed circuit and a welding unit of the sensing tab are affected, and thus the flexible printed circuit applies a structure capable of absorbing a flow to the sensing unit.

However, a total amount of elongation in a rechargeable battery module is within 3 mm, and the sensing unit provided to absorb it may be formed to have an excessively large shape or an excessively small shape.

When the sensing unit is formed to have an excessively large shape, the sensing unit requires an excessively wide area for flow absorption, and handling in a process is difficult due to a long length and flexible material of the sensing unit. Accordingly, fixing defects and welding defects may occur.

In addition, when the sensing unit is formed to have an excessively small shape, a length of the sensing unit for absorbing a flow is short, but since the flow absorbing structure is open to the outside, a curling phenomenon occurs during a FPC manufacturing process. Accordingly, fixing defects may occur, and welding defects may occur.

### SUMMARY

An embodiment of the present disclosure has been made in an effort to provide a rechargeable battery module capable of protecting a connection portion between a sensing unit and a busbar in a flexible printed circuit (FPC) from a flow transferred from the busbar.

An embodiment of the present disclosure has been made in an effort to provide a rechargeable battery module capable of protecting a connection portion between a sensing unit and a sensing tab connected to a busbar in a flexible printed circuit (FPC) from a flow transferred from the busbar.

An embodiment provides a rechargeable battery module including: a plurality of battery cells stacked in a first direction; a busbar holder configured to cover the battery cells while exposing electrode terminals of the battery cells in a third direction (z-axis direction) crossing a second direction (y-axis direction) from both sides of the second direction crossing the first direction (x-axis direction); a busbar configured to connect the electrode terminals exposed to the busbar holder; and a flexible printed circuit (FPC) connected to the busbar and covered with a film, wherein the flexible printing circuit includes: a body portion configured to form a plurality of signal lines in the film; a sensing unit connected to the busbar; a connection portion configured to form a connection line connecting the signal line and the sensing unit in the film and to have a connection width that is set by the film; and a slot hole configured to pass through the film along a circumference of the sensing unit to form the connection portion and to have a penetration width.

The body portion may have a planar area that is set to a length in the first direction and a width in the second direction, and the sensing unit may be formed in the planar area while closing the planar area of the body portion to be connected to the body portion by the connection portion.

The connection line may have a line width W3 that is set in the first direction, and the connection portion may have a first connection width W1 and a second connection width W2 that are respectively set between opposite sides of the connection line and opposite ends of the slot hole in the first direction.

The opposite ends of the slot hole may be formed in a round shape having a diameter D1 that is equal to the penetration width toward the connection line.

The slot hole may have a distance L2 that is set from an end of the sensing unit in the first direction toward the connection line, and the distance may be set to equal to or greater than the flow amount of the entire module.

A distance of the slot hole is set greater than a sum of swelling amounts for each of the battery cells.

The first connection width and the second connection width may be set to be greater than the line width.

The busbar may be formed of aluminium, the sensing unit may be formed of copper, and a welded portion of the busbar and the sensing unit may form a mixed structure of aluminium and copper.

The welded portion of the busbar and the sensing unit may be formed by one of ultrasonic welding, laser welding, and spot welding.

The busbar and the sensing unit may be formed by one of bonding, anisotropic conductive film (ACF) bonding, soldering bonding, and mechanical bonding.

The opposite ends of the slot hole may be formed in a round shape having a diameter D2 that is greater than the penetration width toward the connection line.

An inner side of a round at opposite ends of the slot hole may be connected to the slot hole in the first direction, and an outer side of the round may be connected to the slot hole at an angle θ with respect to the first direction.

A diameter D2 formed at opposite ends of the slot hole may be set equal to or greater than the flow amount of the entire module.

The sensing unit may include: a welded portion welded to the busbar; a notch portion formed on at least one side of the welded portion; and an adhesive portion configured to reinforce an adhesive force provided to the notch portion.

The busbar may be attached to the flexible printed circuit by an adhesive or a tape.

The adhesive or the tape may attach the film covering the sensing unit inside the slot hole in the first direction, and the busbar.

The sensing unit of the flexible printed circuit may be connected to the busbar through a sensing tab.

The sensing tab may include: a first connection portion positioned above the slot hole to be connected to the sensing unit; and a second connection portion connected to the busbar.

At least some of the above and other features of the invention are set out in the claims.

The rechargeable battery module according to an embodiment includes a body portion, a sensing unit, a slot hole, and a connection portion in a flexible printed circuit, and the sensing unit is connected to the busbar and the flow transferred from the busbar is absorbed in the slot hole, and thus the connection portion between the sensing unit and the busbar may be protected from the flow.

### BRIEF DESCRIPTION OF THE DRAWINGS

FIG. 1 illustrates an exploded perspective view of a rechargeable battery module according to a first embodiment of the present disclosure.
FIG. 2 illustrates a partial perspective view of FIG. 1.
FIG. 3 illustrates a top plan view showing a flexible printed circuit and a sensing unit applied to FIG. 2.
FIG. 4 illustrates a top plan view showing a state in which a flexible printed circuit and a sensing unit are positioned on a busbar.
FIG. 5 illustrates a cross-sectional view taken along a line V-V of FIG. 4.
FIG. 6 illustrates a top plan view showing a flexible printed circuit and a sensing unit applied to a rechargeable battery module according to a second embodiment of the present disclosure.
FIG. 7 illustrates a top plan view showing a flexible printed circuit and a sensing unit applied to a rechargeable battery module according to a third embodiment of the present disclosure.
FIG. 8 illustrates a cross-sectional view taken along a line VIII-VIII of FIG. 7.
FIG. 9 illustrates a top plan view showing a flexible printed circuit and a sensing unit applied to a rechargeable battery module according to a fourth embodiment of the present disclosure.
FIG. 10 illustrates a cross-sectional view taken along a line X-X of FIG. 9.
FIG. 11 illustrates a top plan view showing a flexible printed circuit applied to a rechargeable battery module and a sensing unit according to a fifth embodiment of the present disclosure.

### DETAILED DESCRIPTION

Hereinafter, the present disclosure will be described more fully with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

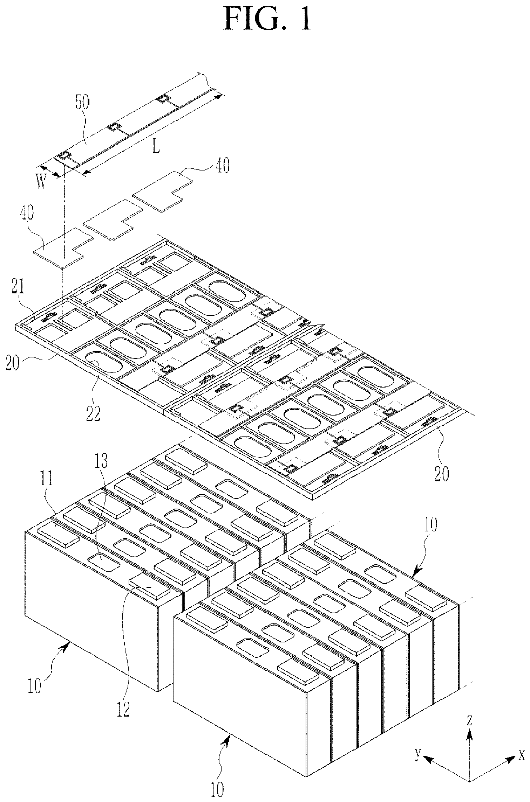

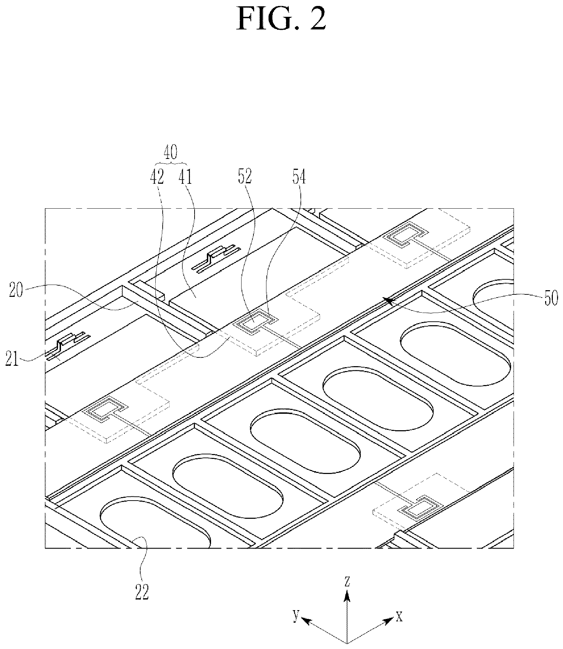

FIG, 1 illustrates an exploded perspective view of a rechargeable battery module according to a first embodiment of the present disclosure, and FIG. 2 illustrates a partial perspective view of FIG. 1.

Referring to FIG. 1 and FIG. 2, the rechargeable battery module according to an embodiment includes a plurality of battery cells 10, a busbar holder 20, a busbar 40, and a flexible printed circuit (FPC) 50.

The rechargeable battery module according to an embodiment may include module frames of various structures, but a detailed description of this configuration will be omitted, and the configuration including a main part of the present disclosure will be described.

The battery cells 10 are formed as rechargeable batteries, and are stacked in a first direction (x-axis direction). A pair of end plates are disposed at opposite ends of the stacked battery cells 10 in the first direction to set restraints of the battery cells 10 in the first direction (x-axis direction).

A pair of side plates are disposed at opposite sides of the battery cells 10 in the second direction (y-axis direction) crossing the first direction to be connected to the pair of end plates to set restraints of the battery cells 10 in the second direction.

As in the first embodiment, when the battery cells 10 are arranged in two rows, a center plate may be positioned between the pair of side plates. The center plate is positioned between the two rows of battery cells 10 in the first direction to set second direction restraints of the battery cells 10 at opposite sides.

The busbar holder 20 may include a busbar support 21 for connection and insulation of electrode terminals 11 and 12 of the battery cells 10; and a vent unit 22 for discharging vent gas from battery cells 10.

The busbar support 21 covers the battery cells 10 while exposing the electrode terminals 11 and 12 in a third direction (cell height, z-axis direction). The third direction (cell height, z-axis direction) intersects the first direction (cell thickness, x-axis direction) and the second direction (cell length, y-axis direction).

The busbar 40 is welded to the electrode terminals 11 and 12 exposed in the third direction through the busbar support 21 to electrically and mechanically connect the electrode terminals 11 and 12. That is, the busbar 40 connects the electrode terminals 11 and 12 of the battery cells 10 adjacent to each other in the first direction in parallel or in series.

The vent unit 22 is configured to correspond to the vents 13 of the battery cells 10 to discharge an opening pressure of the battery cell 10 and the ejected material to an outside of the busbar holder 20 when the vents 13 are opened.

Busbar supports 21 corresponding to the electrode terminals 11 and 12 in the second direction (cell length, y-axis direction) are positioned at opposite sides, and as such, the vent unit 22 corresponding to the vents 13 provided between the electrode terminals 11 and 12 is disposed between the busbar support portions 21.

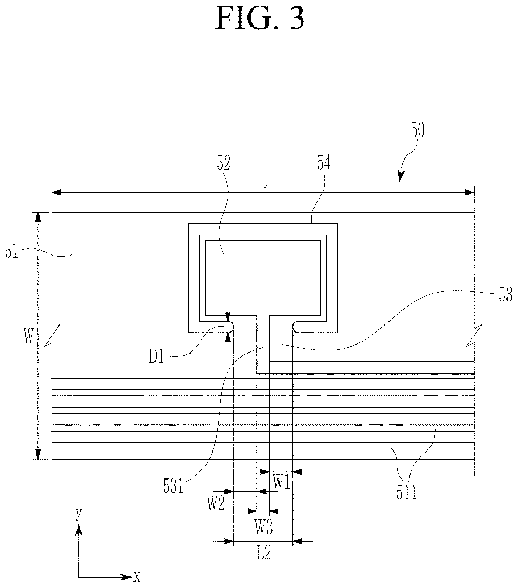

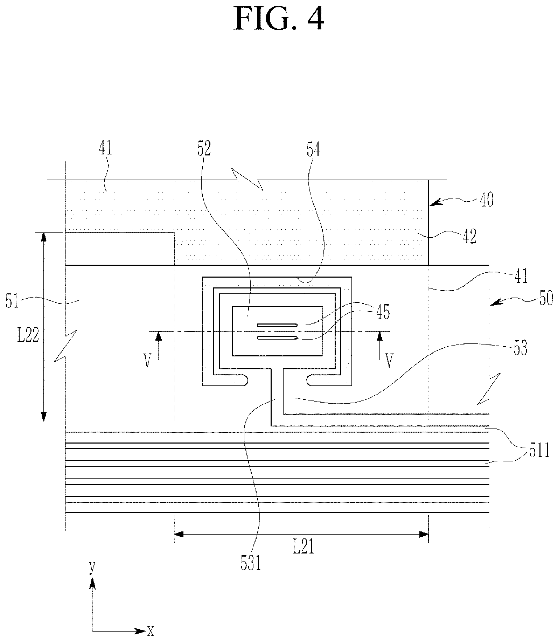

FIG. 3 illustrates a top plan view showing a flexible printed circuit and a sensing unit applied to FIG. 2, and FIG. 4 illustrates a top plan view showing a state in which a flexible printed circuit and a sensing unit are positioned on a busbar.

Referring to FIG. 1 to FIG. 4, the busbar 40 may include a first corresponding portion 41 connected to correspond to the electrode terminals 11 and 12 and a second corresponding portion 42 connected to correspond to the flexible printed circuit 50.

The flexible printed circuit 50 is connected to the busbar 40 and covered with a film. For example, the flexible printed circuit 50 may be covered with two films 501 and 502. For example, the flexible printed circuit 50 forms a printed circuit at an inner portion on which two films 501 and 502 are attached in the thickness direction, and includes a body portion 51, a sensing unit 52, a connection portion 53, and a slot hole 54.

The body portion 51 includes a plurality of signal lines 511 formed as a printed circuit in the films 501 and 502. For example, in the flexible printed circuit 50, the films 501 and 502 may be formed of a polyimide film or a polyester film.

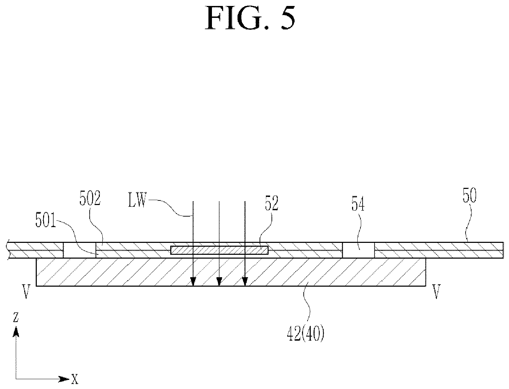

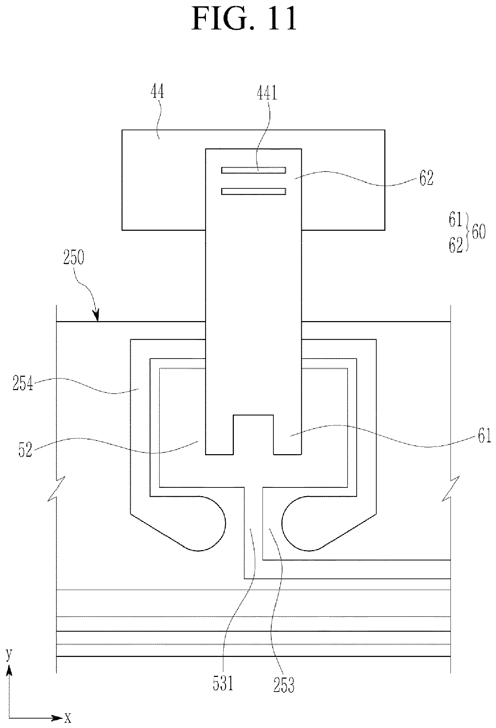

FIG. 5 illustrates a cross-sectional view taken along a line V-V of FIG. 4. Referring to FIG. 2 to FIG. 5, the sensing unit 52 may be connected to a side of the busbar 40, may be formed of a thin copper film, and may be open to one side or opposite sides (not illustrated). Accordingly, the sensing unit 52 may be directly connected to the busbar 40. In addition, the sensing unit 52 may be indirectly connected to the busbar 40 (see FIG. 11).

The connection portion 53 forms a connection line 531 connecting the signal line 511 and the sensing unit 52 in the films 501 and 502, and has a total connection width (W1+W2+W3) set by the films 501 and 502.

The slot hole 54 penetrates the films 501 and 502 along circumference of the sensing unit 52 to form the connection portion 53 and has a predetermined penetration width. That is, the slot hole 54 is formed to pass through the films 501 and 502, and the connection portion 53 is formed to not pass through the films 501 and 502.

Again, in the flexible printed circuit 50, the body portion 51 may have a planar area L*W set to a length L in the first direction (x-axis direction) and a width W in the second direction (y-axis direction). The sensing unit 52 may be formed in a plurality along the first direction in the planar area L*W while closing or covering the planar area L*W of the body portion 51, and may be connected to the body portion 51 through each connection portion 53.

The connection line 531 may have a line width W3 that is set in the first direction (x-axis direction). The connection portion 53 may have a first connection width W1 and a second connection width W2 that are set between opposite sides of the connection line 531 and ends of the slot hole 54 in the first direction, respectively. The first connection width W1 and the second connection width W2 of the connection portion 53 protect the connection line 531 to maintain connection between the sensing unit 52 and the signal line 511.

Opposite ends of the slot hole 54 may be formed in a round shape having a diameter D1 that is equal to a penetration width toward the connecting line 531. The round shape prevents breakage due to stress concentration at an end of the slot hole 54. In addition, the slot hole 54 may have a distance L2 set from an end of the sensing unit 52 in the first direction toward the connection line 531.

This distance L2 may be set equal to or greater than a flow amount (that is, movement amount) of the entire module. That is, the distance L2 of the slot hole 54 may be set to be greater than a sum of swelling amounts for each of the battery cells 10. This distance L2 may be set to the total connection width (W1+W2+W3) to make it possible to stably maintain a connection structure or welding structure of the sensing unit 52 and the busbar 40 while effectively responding to the flow amount of the entire module along the first direction.

In addition, the first connection width W1 and the second connection width W2 may be set greater than the line width W3, and thus it is possible to prevent cutting of the connection line 531 with respect to the flow amount of the entire module along the first direction.

Although integrity of the sensing unit 52 and the signal line 511 is weakened due to the slot hole 54, the distance L2 of the connection portion 53 may maintain the strength of the connection line 531, and also allows the slot hole 54 to sufficiently absorb a flow transferred to the battery cell 10 and the busbar 40.

Referring back to FIG. 1, FIG. 2, FIG. 4, and FIG. 5, the busbar 40 may be made of aluminium, and the sensing unit 52 may be made of copper. The busbar 40 and the sensing unit 52 may be connected by ultrasonic welding, laser welding (LW), or spot welding.

In the busbar 40, the first corresponding portion 41 is connected to the electrode terminals 11 and 12 by welding, and the second corresponding portion 42 may be connected to the flexible printed circuit 50 by welding. The second corresponding portion 42 protrudes from one side of the first corresponding portion 41 in the second direction (y-axis direction) to be connected to the sensing unit 52 of the flexible printed circuit 50 by welding. By the action of welding, a welded portion 45 connecting the second corresponding portion 42 and the sensing unit 52 is formed.

In addition, the second corresponding portion 42 has an area L21*L22 of a first length L21 in the first direction (x-axis direction) and a second length L22 in the second direction (y-axis direction). The second corresponding portion 42 supports the sensing unit 52, the connection portion 53, the slot hole 54, the connection line 531 and the signal line 511 of the flexible printed circuit 50. The connection line 531 may be entirely supported, and the signal line 511 may be partially supported.

As such, the rechargeable battery module of the first embodiment may stabilize a connection structure of the busbar 40 and the sensing unit 52 with respect to the flow amount of the entire module, and may prevent the connection line 531 from being cut.

In addition, the rechargeable battery module of the first embodiment supports a large area of the flexible printed circuit 50 with the second corresponding portion 42 of the busbar 40, and it may protect the flexible printed circuit 50 by a flow transferred from the busbar 40 while preventing the flexible printed circuit 50 from sagging.

Meanwhile, in the rechargeable battery module of the first embodiment, the connection line 531 connects the sensing unit 52 to the signal line 511. The sensing unit 52 is connected to the second corresponding portion 42 of the busbar 40 to sense the battery cell 10 connected to the busbar 40 and transmit a detection signal to the connection line 531 and the signal line 511.

In addition, the connection portion 53 and the slot hole 54 prevent the flexible printed circuit 50 from opening to the outside, to prevent curling in a manufacturing process of the flexible printed circuit 50, and thus they enable the sensing unit 52 to be stably fixed to the busbar 40. Accordingly, welding defects due to poor fixation of the sensing unit 52 may be improved.

Hereinafter, various embodiments of the present disclosure will be described. Compared to the first embodiment and the previously described embodiments, descriptions of the same components will be omitted, and descriptions of different components will be described.

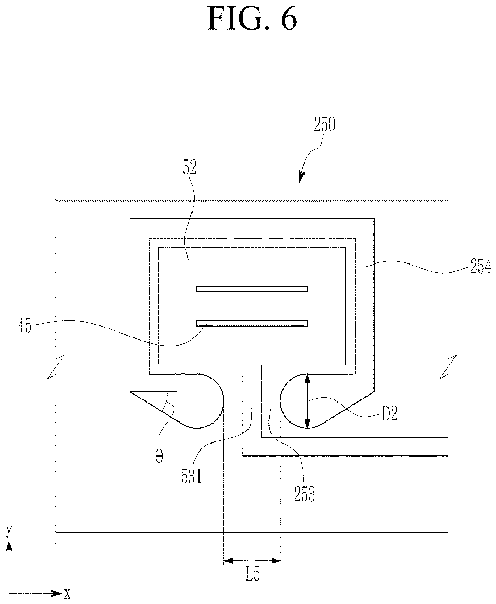

FIG. 6 illustrates a top plan view showing a flexible printed circuit and a sensing unit applied to a rechargeable battery module according to a second embodiment of the present disclosure. Referring to FIG. 6, in the flexible printed circuit 250 applied to the rechargeable battery module of the second embodiment, opposite ends of the slot hole 254 are rounded toward the connection line 531 to have a larger diameter D2 than the penetration width. Accordingly, the slot hole 254 has a distance L5 set from an end of the sensing unit 52 in the first direction toward the connection line 531.

This distance L5 is set equal to or greater than a flow amount of the entire module. That is, the distance L5 of the slot hole 254 is set to be greater than a sum of swelling amounts for each of the battery cells 10. This distance L5 is set to the entire connection width of the connection portion 253 may effectively respond to a flow amount of the entire module along the first direction.

In the meantime, an inside of the round at opposite ends of the slot hole 254, that is, a side adjacent to the sensing unit 52 is connected to the slot hole 254 in the first direction (x-axis direction), and an outer side of the round, that is, a far side from the sensing unit 52 is connected to the slot hole 254 at an angle θ with respect to the first direction (x-axis direction).

Compared to the slot hole 54 of the first embodiment, the outer side of the round connected at an angle θ in the slot hole 254 may more effectively respond to the amount of flow of the entire module along the first direction, and makes it possible to partially respond even to the flow amount of the entire module along the second direction.

When the distance L5 of the second embodiment and the distance L2 of the first embodiment are the same, compared to the round with a diameter D1 equal to the penetration width in the first embodiment, the round having a larger diameter D2 than the penetration width in the second embodiment may more disperse a stress caused by the flow, thereby making it possible to respond more effectively to the flow amount of the entire module.

That is, the connection portion 253 of the second embodiment stably maintaining the connection structure or welding structure between the sensing unit 52 and the busbar 40 may be prevented from breakage more effectively than the connection portion 53 of the first embodiment stably maintaining the connection structure or welding structure between the sensing unit 52 and the busbar 40.

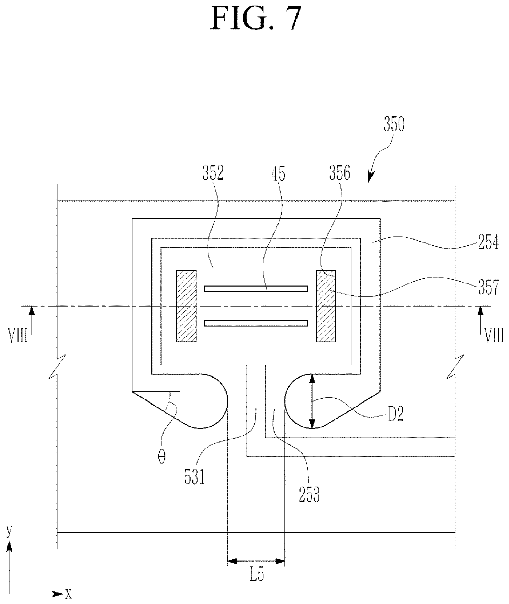

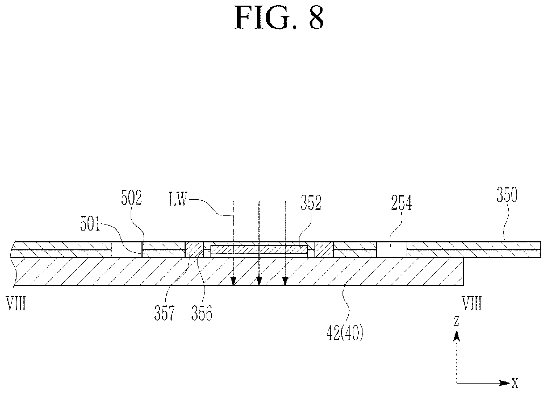

FIG. 7 illustrates a top plan view showing a flexible printed circuit and a sensing unit applied to a rechargeable battery module according to a third embodiment of the present disclosure, and FIG. 8 illustrates a cross-sectional view taken along a line VIII-VIII of FIG. 7.

Referring to FIG. 7 and FIG. 8, in the flexible printed circuit 350 applied to the rechargeable battery module of the third embodiment, the sensing unit 352 includes a welded portion 45, a notch portion 356 and an adhesive portion 357.

The notch portion 356 is formed on at least one side of the welded portion 45. That is, the notch portion 356 is formed to extend through the sensing unit 352 and the two films 501 and 502 provided at opposite sides of the sensing unit 352. The adhesive portion 357 injects adhesive into the notch portion 356 to further strengthen adherence between the sensing unit 352 and the films 501 and 502.

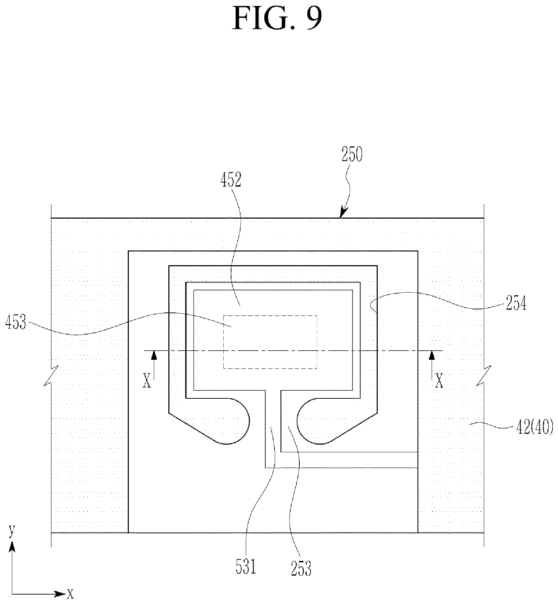

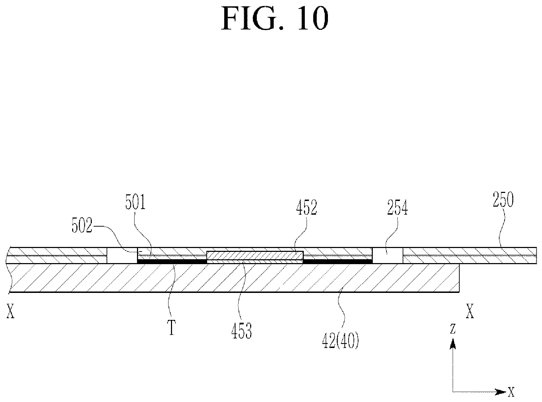

FIG. 9 illustrates a top plan view showing a flexible printed circuit and a sensing unit applied to a rechargeable battery module according to a fourth embodiment of the present disclosure, and FIG. 10 illustrates a cross-sectional view taken along a line X-X of FIG. 9.

Referring to FIG. 9 and FIG. 10, the busbar 40 and the flexible printed circuit 250 applied to the rechargeable battery module of the fourth embodiment may be bonded to each other.

As an example, the second corresponding portion 42 of the busbar 40 and the sensing unit 452 are formed by using one (453) of bonding, anisotropic conductive film (ACF) bonding, soldering bonding, and mechanical bonding. FIG. 10 illustrates an anisotropic conductive film as an example of the bonding 453.

In addition, the second corresponding portion 42 of the busbar 40 and the sensing unit 452 of the flexible printed circuit 250 may be attached with an adhesive or a tape T. That is, the tape T is attached to one side film 501 covering the sensing unit 452 and the second corresponding portion 42 inside the slot hole 254. Attachment of the tape T further strengthens the bonding 453 between the sensing unit 452 and the second corresponding portion 42.

FIG. 11 illustrates a top plan view showing a flexible printed circuit applied to a rechargeable battery module and a sensing unit according to a fifth embodiment of the present disclosure. Referring to FIG. 11, in the rechargeable battery module according to the fifth embodiment, the sensing unit 52 of the flexible printed circuit 250 is connected to the busbar 44 through a sensing tab 60. The sensing tab 60 includes a first connection portion 61 and a second connection portion 62.

The first connection unit 61 is positioned above the slot hole 254 to be connected to the sensing unit 52. The connection between the first connection portion 61 and the sensing unit 52 may be formed by applying the structure of the welded portion 45 of the first embodiment and the bonding 453 of the fourth embodiment. The second connection portion 62 is connected to the busbar 44 by welding 441. The sensing tab 60 may prevent the flexible printed circuit 250 from sagging.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of Symbols>

| | | | |
|---|---|---|---|
| 10: | battery cell | 11, 12: | electrode terminal |
| 13: | vent | 20: | busbar holder |
| 21: | busbar support | 22: | vent unit |
| 40, 44: | busbar | 41: | first corresponding portion |
| 42: | second corresponding portion | 44: | busbar |
| 45: | welded portion | 50, 250: | flexible printing circuit (FPC) |
| 51: | body portion | 52: | sensing unit |
| 53, 253: | connection portion | 54, 254: | slot hole |
| 60: | sensing tab | 61: | first connection portion |
| 62: | second connection portion | 254: | slot hole |
| 350: | flexible printing circuit | 352: | sensing unit |
| 356: | notch portion | 357: | adhesive portion |
| 452: | sensing unit | 453: | bonding |
| 501, 502: | film | 511: | signal line |
| 531: | connection line | D1: | diameter |
| D2: | diameter | L: | length |
| L2: | distance | L5: | distance |
| LW: | laser welding | L*W: | planar area |
| L21: | first length | L22: | second length |
| L21 *L22: | area | T: | tape |
| W: | width | W1: | first connection width |
| W2: | second connection width | W1+W2+W3: | entire connection width |
| W3: | line width | θ: | angle |

## Claims

1. A rechargeable battery module comprising:
a plurality of battery cells stacked in a first direction;
a busbar holder configured to cover the battery cells while exposing electrode terminals of the battery cells in a third direction crossing a second direction from both sides of the second direction crossing the first direction;
a busbar configured to connect the electrode terminals exposed to the busbar holder; and
a flexible printed circuit connected to the busbar and covered with a film,
wherein the flexible printing circuit includes:
a body portion configured to form a plurality of signal lines in the film;
a sensing unit connected to the busbar;
a connection portion configured to form a connection line connecting the signal line and the sensing unit in the film and to have a connection width that is set by the film; and
a slot hole configured to pass through the film along a circumference of the sensing unit to form the connection portion and to have a penetration width.

2. The rechargeable battery module of claim 1, wherein
the body portion has a planar area that is set to a length in the first direction and a width in the second direction, and
the sensing unit is formed in the planar area while closing the planar area of the body portion to be connected to the body portion by the connection portion.

3. The rechargeable battery module of claim 1 or claim 2, wherein
the connection line has a line width W3 that is set in the first direction, and
the connection portion has a first connection width W1 and a second connection width W2 that are respectively set between opposite sides of the connection line and opposite ends of the slot hole in the first direction.

4. The rechargeable battery module of claim 3, wherein
the opposite ends of the slot hole are formed in a round shape having a diameter D1 that is equal to the penetration width toward the connection line.

5. The rechargeable battery module of claim 3 or claim 4, wherein
the slot hole has a distance L2 that is set from an end of the sensing unit in the first direction toward the connection line, and
the distance is set equal to or greater than a flow amount of an entire module.

6. The rechargeable battery module of any one of claims 3 to 5, wherein
a distance of the slot hole is set greater than a sum of swelling amounts for each of the battery cells.

7. The rechargeable battery module of any one of claims 3 to 6, wherein
the first connection width and the second connection width are set greater than the line width.

8. The rechargeable battery module of any one of claims 1 to 7, wherein
the busbar is formed of aluminium,
the sensing unit is formed of copper, and
a welded portion of the busbar and the sensing unit forms a mixed structure of aluminium and copper.

9. The rechargeable battery module of any one of claims 1 to 8, wherein:
(i) the welded portion of the busbar and the sensing unit is formed by one of ultrasonic welding, laser welding, and spot welding; and/or
(ii) the busbar and the sensing unit are formed by one of bonding, anisotropic conductive film bonding, soldering bonding, and mechanical bonding.

10. The rechargeable battery module of claim 3, wherein
the opposite ends of the slot hole are formed in a round shape having a diameter D2 that is greater than the penetration width toward the connection line.

11. The rechargeable battery module of claim 10, wherein
an inner side of a round at opposite ends of the slot hole is connected to the slot hole in the first direction, and an outer side of the round is connected to the slot hole at an angle θ with respect to the first direction.

12. The rechargeable battery module of claim 10 or claim 11, wherein
a diameter D2 formed at opposite ends of the slot hole is set to equal to or more than a flow amount of an entire module.

13. The rechargeable battery module of any one of claims 10 to 12, wherein
the sensing unit includes:
a welded portion welded to the busbar;
a notch portion formed on at least one side of the welded portion; and
an adhesive portion configured to reinforce an adhesive force provided to the notch portion.

14. The rechargeable battery module of any one of claims 10 to 13, wherein
the busbar is attached to the flexible printed circuit by an adhesive or a tape, optionally wherein
the adhesive or the tape attaches the film covering the sensing unit inside the slot hole in the first direction and the busbar.

15. The rechargeable battery module of claim 1, wherein
the sensing unit of the flexible printed circuit is connected to the busbar through a sensing tab, optionally wherein
the sensing tab includes:
a first connection portion positioned above the slot hole to be connected to the sensing unit; and
a second connection portion connected to the busbar.
